# FASCICULE DE BREVET EUROPEEN

(11) **EP 0 385 822 B1**
(45) Date de publication et mention de la délivrance du brevet: **08.06.1994**
(21) Numéro de dépôt: 90400311.8
(22) Date de dépôt: 05.02.1990
(51) Int. Cl.: G02C 5/14, G02C 5/20

(54) **Branche de monture de lunettes et monture de lunettes correspondante**
Brillenbügel und dazu passendes Brillengestell
Spectacle bow and spectacle frame therefor

(30) Priorité: 28.02.1989 FR 8902590
(43) Date de publication de la demande: 05.09.1990
(73) Titulaire: LOGO, société anonyme, Joinville le Pont (Val de Marne) (FR)
(72) Inventeur: Lhospice, Bernard, F-41000 Blois (FR)
(74) Mandataire: CABINET BONNET-THIRION

(56) Documents cités:
- EP-A- 0 274 563
- WO-A-80/01844
- DE-C- 542 595
- FR-A- 1 335 949
- GB-A- 1 378 683

## Description

L'invention se rapporte à une branche de monture de lunettes et concerne plus particulièrement un perfectionnement permettant à l'utilisateur d'adapter la forme générale d'une telle branche en fonction de son activité, notamment pour améliorer le maintien de la monture lorsqu'il pratique une activité sportive.

Une branche de lunettes normale se termine généralement par une courbe assez ouverte propre à venir reposer sur la partie supérieure de l'oreille, sans gêne pour l'utilisateur. Cependant, pour certaines activités comme par exemple la pratique d'un sport, il est souhaitable d'augmenter la tenue des lunettes. On a proposé de relier les deux extrémités des branches par un cordon élastique passant derrière la tête. On a aussi proposé des branches aux extrémités élastiques, à courbure accentuée, pour que celles-ci s'engagent davantage derrière les oreilles. De telles montures sont relativement peu esthétiques et ne sont tolérables que pendant un temps limité et pour la pratique d'activités physiques particulières. L'utilisateur doit le plus souvent posséder deux paires de lunettes. Par ailleurs, le document GB-A-1 378 638 décrit une branche dont l'extrémité peut être déformée à volonté. Le document EP-A-0 274 563 montre une branche de longueur ajustable. L'invention propose un concept différent.

L'invention concerne essentiellement une branche de monture de lunettes comportant deux parties distinctes situées dans le prolongement l'une de l'autre, respectivement un corps de branche ayant deux extrémités et étant destiné à être relié à la face de la monture par une première de ces extrémités et un embout de branche, caractérisée en ce que ledit embout de branche est monté tournant sur lui-même à la seconde extrémité dudit corps de branche et en ce que cet embout de branche comporte deux bords opposés s'étendant de part et d'autre de son axe de rotation, l'un des bords ayant une courbure notablement plus accentuée que l'autre, ledit embout pouvant ainsi être placé dans l'une ou l'autre de deux positions prédéterminées de manière que l'un desdits bords puisse reposer sur la partie arrière de l'oreille.

Selon un premier mode de réalisation, le corps de branche comporte une armature longitudinale, en métal, qui se prolonge à l'intérieur de l'embout de branche et forme l'axe de rotation de ce dernier. L'extrémité de l'armature est élargie de façon à définir un épaulement de retenue et empêcher ainsi le coulissement axial dudit embout de branche par rapport audit corps de branche.

Selon une variante préférée, la partie de l'armature engagée dans ledit embout de branche est munie d'une pluralité de petits épaulements de retenue facilitant le montage.

L'invention sera mieux comprise et d'autres avantages de celle-ci apparaîtront plus clairement à la lumière de la description qui va suivre d'une branche de monture de lunettes conforme à son principe, donnée uniquement à titre d'exemple et faite en référence aux dessins annexés dans lesquels:
- la figure 1 représente une branche de monture de lunettes conforme à l'invention;
- la figure 2 est une vue partielle en coupe avec arrachement de l'extrémité de cette branche;
- la figure 3 représente la même branche dans une position d'utilisation convenant plus particulièrement à la pratique d'une activité sportive; et
- la figure 4 illustre une variante.

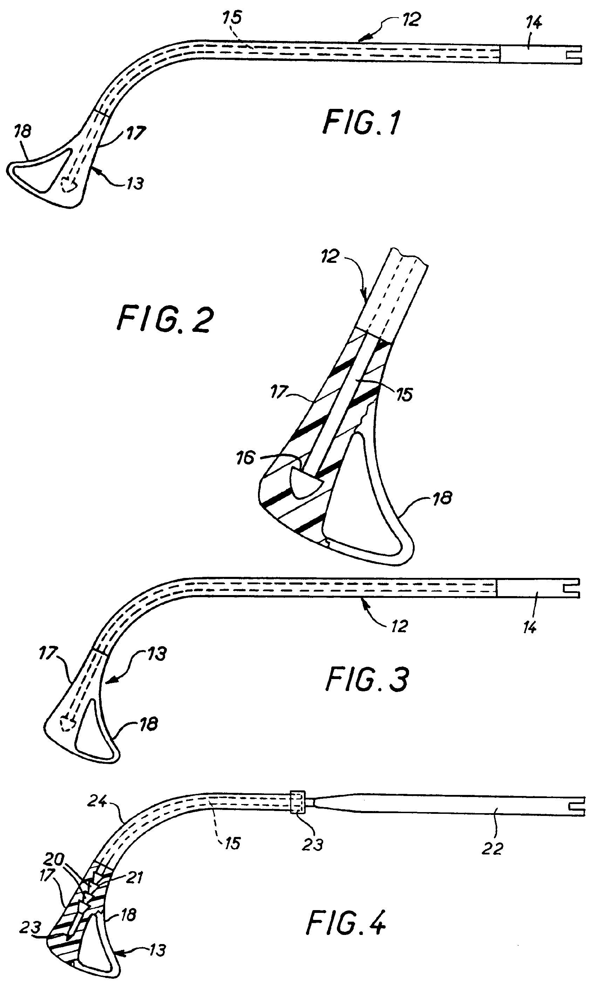

La branche de monture de lunettes représentée sur les figures 1 à 3 comporte deux parties distinctes: un corps de branche 12 et un embout de branche 13. Ces deux éléments sont agencés dans le prolongement l'un de l'autre. Une extrémité du corps de branche comporte, de façon classique, un charnon 14 constituant une partie de l'articulation par laquelle ladite branche est montée au reste de la monture de lunettes non représentée. Le corps de branche est ici en matière plastique moulée autour d'une armature 15, métallique. L'embout de branche 13 est monté tournant sur lui-même à l'extrémité du corps de branche opposé audit charnon. A cet effet, l'armature longitudinale 15 se prolonge au-delà de la partie en matière plastique du corps de branche jusqu'à l'intérieur de l'embout de branche 13. L'armature a la forme générale d'une tige métallique à section circulaire, elle constitue donc l'axe de rotation de l'embout de branche. L'embout de branche 13 et la partie de l'armature 15 qui y est engagée comportent des moyens de liaison propres à empêcher le coulissement axial de l'embout de branche 13 par rapport audit corps de branche 12. Plus précisément, dans l'exemple représenté, l'extrémité de l'armature 15 (située à l'intérieur de l'embout 13) est élargie. La forme de cette extrémité élargie est propre à empêcher tout mouvement axial des deux parties de branches tout en permettant la rotation de l'embout 13.

Comme le montre la figure 2, l'extrémité élargie définit un épaulement de retenue 16.

Selon une particularité importante de l'invention, l'embout de branche 13 comporte deux bords opposés 17 et 18 s'étendant de part et d'autre de son axe de rotation constitué par la partie extrême de l'armature 15. Le bord 18 a une courbure notablement plus accentuée que le bord 17.

Dans la variante préférée de la figure 4, les éléments analogues qui portent les mêmes références numériques ne seront pas décrits à nouveau. Selon ce mode de réalisation, la partie de l'armature 15 qui est engagée dans l'embout de branche 13 comporte une pluralité de tronçons tronconiques 20 définissant entre eux plusieurs petits épaulements de retenue 21. L'extrémité 23 de l'armature est effilée pour faciliter son introduction dans ledit embout de branche. Le fait de définir ainsi une pluralité de petits épaulements 21 facilite le montage de l'embout de branche, par simple emboîtement à force.

Dans l'exemple de la figure 4, en outre, l'armature 15 forme, du côté de la charnière, une branche métallique 22 qui se prolonge, au-delà d'une virole en métal 23 par une partie cylindrique s'étendant à l'intérieur d'un manchon en matière plastique 24, éventuellement recouvert d'un matériau souple tel que du caoutchouc de silicone.

Ainsi, tant que l'utilisateur ne pratique pas une activité physique notable, il place les embouts 17 de sa monture de lunettes dans la position illustrée à la figure 1. La courbure globale de l'extrémité de branche est donc relativement peu accentuée et les branches de la monture reposent essentiellement sur les parties supérieures des oreilles. En revanche, si l'utilisateur souhaite pratiquer une activité sportive, il lui suffit de tourner chacun des embouts de branches de 180° pour obtenir la configuration illustrée à la figure 3. Ainsi, chaque branche de la monture se termine par une partie présentant globalement une courbure relativement accentuée (figure 3) formant une sorte de crochet destiné à prendre appui sur la base inférieure de l'oreille, approximativement dans le sinus du mastoïde.

## Revendications

1. Branche de monture de lunettes comportant deux parties distinctes situées dans le prolongement l'une de l'autre, respectivement un corps de branche (12) ayant deux extrémités et étant destiné à être relié à la face de la monture par une première de ces extrémités et un embout de branche (13), caractérisée en ce que ledit embout de branche est monté tournant sur lui-même à la seconde extrémité dudit corps de branche et en ce que cet embout de branche comporte deux bords opposés (17, 18) s'étendant de part et d'autre de son axe de rotation, l'un des bords ayant une courbure notablement plus accentuée que l'autre, ledit embout pouvant ainsi être placé dans l'une ou l'autre de deux positions prédéterminées de manière que l'un desdits bords puisse reposer sur la partie arrière de l'oreille.

2. Branche de monture de lunettes selon la revendication 1, caractérisée en ce que le corps de branche (12) comporte une armature longitudinale (15) qui se prolonge à l'intérieur dudit embout de branche (13) et définit l'axe de rotation de ce dernier.

3. Branche de monture de lunettes selon la revendication 2, caractérisée en ce que ledit embout de branche (13) et la partie de ladite armature engagée dans cet embout de branche comportent des moyens de liaison propres à empêcher le coulissement axial dudit embout (13) par rapport audit corps de branche (12).

4. Branche de monture de lunettes selon la revendication 3, caractérisée en ce que l'extrémité de ladite armature est élargie.

5. Branche de monture de lunettes selon la revendication 4, caractérisée en ce qu'un épaulement de retenue (16) est défini par cette extrémité élargie.

6. Branche de monture de lunettes selon la revendication 2 ou 3, caractérisée en ce que la partie de ladite armature engagée dans cet embout de branche comporte une pluralité de tronçons tronconiques ou analogues définissant entre eux plusieurs petits épaulements de retenue.

7. Branche de monture de lunettes selon la revendication 6, caractérisée en ce que l'extrémité de la partie de ladite armature engagée dans ledit embout est effilée.

8. Branche de monture de lunettes selon l'une des revendications 2 à 7, caractérisée en ce que ladite armature (15) est métallique.

9. Monture de lunettes caractérisée en ce qu'elle comporte deux branches selon l'une des revendications précédentes.

## Patentansprüche

1. Brillenbügel mit zwei getrennten Teilen, die als Verlängerung einer des anderen angeordnet sind, wobei jeweils ein Bügelkörper (12) zwei Enden hat und bestimmt ist, an der Vorderseite des Gestells durch ein erstes Ende verbunden zu sein, und einem Bügeleinsatz (13), dadurch gekennzeichnet, daß der Bügeleinsatz an dem zweiten Ende des Bügelkörpers auf sich selbst drehend angebracht ist, und daß dieser Bügeleinsatz zwei entgegengesetzte Kanten (17, 18) besitzt, die sich zu beiden Seiten der Drehachse erstrecken, wobei eine der Kanten eine erheblich stärkere Krümmung aufweist als die andere, wobei der Bügeleinsatz in der einen oder anderen der zwei vorbestimmten Stellungen derart gesetzt werden kann, daß eine der Kanten auf dem hinteren Teil des Ohres aufliegen kann.

2. Brillenbügel nach Anspruch 1, dadurch gekennzeichnet, daß der Bügelkörper (12) eine längsgerichtete Struktur (15) beinhaltet, die sich in das Innere des Bügeleinsatzes (13) erstreckt und dessen Drehachse bildet.

3. Brillenbügel nach Anspruch 2, dadurch gekennzeichnet, daß der Bügeleinsatz (13) und der in ihn eingreifende Teil der Struktur Verbindungsmittel vorsehen, die eine axiale Verschiebung des Einsatzes (13) bezüglich des Bügelkörpers (12) verhindern.

4. Brillenbügel nach Anspruch 3, dadurch gekennzeichnet, daß das Ende der Struktur verbreitert ist.

5. Brillenbügel nach Anspruch 4, dadurch gekennzeichnet, daß ein Rückhalteansatz (16) durch das erweiterte Ende definiert ist.

6. Brillenbügel nach Anspruch 2 oder 3, dadurch gekennzeichnet, daß der Teil der Struktur, der in den Bügeleinsatz eingreift, eine Vielzahl von kegelstumpfartigen Teilstücken oder dgl. aufweist, die zwischeneinander mehrere kleine Rückhalteansätze bilden.

7. Brillenbügel nach Anspruch 6, dadurch gekennzeichnet, daß das Ende des Teiles der Struktur, die in den Einsatz eingreift, verjüngt ist.

8. Brillenbügel nach einem der Ansprüche 2 bis 7, dadurch gekennzeichnet, daß die Struktur (15) metallisch ist.

9. Brillengestell dadurch gekennzeichnet, daß es zwei Bügel aufweist gemäß einem der vorangehenden Ansprüche.

## Claims

1. A spectacles frame sidepiece comprising two separate parts which are disposed in the prolongation of each other, respectively a sidepiece body (12) which has two ends and which is intended to be connected to the face of the frame by a first one of these ends, and a sidepiece end piece (13), characterised in that said sidepiece end piece is rotatably mounted on itself at the second end of said sidepiece body and in that this sidepiece end piece comprises two oppositely disposed edges (17, 18) which extend on either side of its axis of rotation, one of the edges having a curvature which is significantly more accentuated than the other, said end piece thus being able to be placed in one of two predetermined positions in such a way that one of said edges can rest on the rear part of the ear.

2. A spectacles frame sidepiece according to Claim 1, characterised in that the sidepiece body (12) comprises a longitudinal strengthening member (15) which extends inside said sidepiece end piece (13) and which defines the axis of rotation of this latter.

3. A spectacles frame sidepiece according to Claim 2, characterised in that said sidepiece end piece (13) and the part of said strengthening member which engages in the sidepiece end piece comprise connecting means which are capable of preventing axial sliding of said end piece (13) relative to said sidepiece body (12).

4. A spectacles frame sidepiece according to Claim 3, characterised in that the end of said strengthening member is of increased width.

5. A spectacles frame sidepiece according to Claim 4, characterised in that a retaining shoulder (16) is defined by the end of increased width.

6. A spectacles frame sidepiece according to Claim 2 or Claim 3, characterised in that the part of said strengthening member which engages in the sidepiece end piece comprises a plurality of frustoconical pieces, or the like, which define between them a number of small retaining shoulders.

7. A spectacles frame sidepiece according to Claim 6, characterised in that the end of the part of said strengthening member which engages in said end is tapered.

8. A spectacles frame sidepiece according to one of Claims 2 to 7, characterised in that said strengthening member (15) is metal.

9. A spectacles frame, characterised in that it comprises two sidepieces according to one of the preceding claims.
